(19) Europäisches Patentamt
European Patent Office
Office européen des brevets

(11) EP 1 961 797 B1

(12) EUROPEAN PATENT SPECIFICATION

(45) Date of publication and mention of the grant of the patent:
**13.11.2013 Bulletin 2013/46**

(51) Int Cl.:
***C09D 201/02*** *(2006.01)* ***C08K 5/521*** *(2006.01)*

(21) Application number: **08250585.0**

(22) Date of filing: **20.02.2008**

(54) **Aqueous compositions and processes including fluorocarbons**

Wässrige Zusammensetzungen und Verfahren mit Fluorkohlenstoffen

Compositions aqueuses et procédés incluant des fluorocarbones

(84) Designated Contracting States:
**DE FR GB IT**

(30) Priority: **23.02.2007 US 903065 P**

(43) Date of publication of application:
**27.08.2008 Bulletin 2008/35**

(73) Proprietor: **Rohm and Haas Company**
**Philadelphia, PA 19106-2399 (US)**

(72) Inventors:
- **Brownell, Arnold Stan**
  **Lansdale,**
  **Pennsylvania 19446 (US)**
- **Lau, Willie**
  **Lower Gwynedd,**
  **Pennsylvania 19002 (US)**

(74) Representative: **Buckley, Guy Julian et al**
**Patent Outsourcing Limited**
**1 King Street**
**Bakewell**
**Derbyshire DE45 1DZ (GB)**

(56) References cited:
**EP-A1- 2 086 989** **WO-A1-01/36526**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 961 797 B1

## Description

This invention relates to aqueous compositions and processes including certain fluorocarbons and polymers. More particularly, this invention relates to an aqueous composition including: a) an aqueous medium; b) a polymer; c) from 0.03% to 1% by weight based on the weight of the polymer of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is from 1 to 4, C is a phosphate residue, and D is a cation, wherein the compound has a bioconcentration factor (BCF) from 1 to 1000. Further, the present invention is related to processes whereby the aqueous composition is provided and whereby a polymeric coating is provided. The polymeric coating of this invention is particularly useful as a coating having block resistance superior to the coating absent the fluorocarbon compound.

"Fluoroadditives: antiblock characteristics in architectural paint systems", Surface Coatings Australia,(2004) 41(4), 14-16 discloses certain additives including fluorocarbons for reducing blocking behavior of coatings. However, the disclosed fluorocarbon compositions have an undesirably high bioconcentration factor ("BCF"), that is, they become concentrated in the biological system over time. It has now been found that certain select fluorocarbons have both a useful level of block resistance when incorporated in dry polymeric coatings and a desirable BCF factor.

In a first aspect of the present invention, there is provided an aqueous composition comprising: a) an aqueous medium; b) a polymer; and c) from 0.03% to 1% by weight based on the weight of said polymer, of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is fromlto 4, C is a phosphate residue, D is a cation, wherein said compound has a BCF from 1 to 1000.

In a second aspect of the present invention, there is provided a process for providing an aqueous composition comprising: a) an aqueous medium; b) a polymer; c) from 0.03% to 1% by weight based on the weight of said polymer of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is fromlto 4, C is a phosphate residue, and D is a cation, wherein said compound has a bioconcentration factor (BCF) from 1 to 1000.

In a third aspect of the present invention, there is provided a process for providing a polymeric coating comprising: a) forming a composition comprising an aqueous medium and a polymer; b) admixing therewith from 0.03% to 1% by weight based on the weight of said polymer, of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is fromlto 4, C is a phosphate residue, and D is a cation, wherein said compound has a BCF from 1 to 1000; c) applying said admixture to a substrate; and d) drying, or allowing to dry, said admixture.

In one embodiment of the present invention, an aqueous composition is provided including: a) an aqueous medium; b) a polymer; and c) from 0.03% to 1% by weight based on the weight of the polymer, of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is fromlto 4, C is a phosphate, and D is a cation, wherein the compound has a BCF of from 1 to 1000, preferably from 1 to 100.

The aqueous composition of the invention includes an aqueous medium, the continuous phase of the aqueous composition excluding any soluble polymer being predominantly water; optionally the medium may include various soluble materials such as, for example, alcohols and alcohol esters. In certain embodiments the aqueous medium may be provided wholly or in part with the polymer, such as, for example, by an aqueous emulsion polymer which may provide both the polymer and an aqueous medium. The aqueous composition of the invention includes a polymer which may be soluble, swellable, or dispersed in the aqueous composition. The polymer may be thermoplastic, self-crosslinking, or thermosetting via the agency of an external crosslinker. Preferably the polymer is a dispersed polymer prepared by emulsion polymerization. The emulsion polymer typically includes at least one copolymerized ethylenically unsaturated monomer such as, for example, a (meth)acrylic ester monomer including methyl (meth)acrylate, ethyl (meth)acrylate, butyl (meth)acrylate, 2-ethylhexyl (meth)acrylate, decyl (meth)acrylate, lauryl (meth)acrylate, stearyl (meth)acrylate, hydroxyethyl (meth)acrylate, hydroxypropyl (meth)acrylate, ureido-functional (meth)acrylates and acetoacetates, acetamides or cyanoacetates of (meth)acrylic acid; styrene or substituted styrenes; vinyl toluene; butadiene; vinyl acetate or other vinyl esters; vinyl monomers such as vinyl chloride, vinylidene chloride, N-vinyl pyrollidone; (meth)acrylonitrile; and N-alkylol (meth)acrylamide; carboxylic acid monomers such as (meth)acrylic acid, crotonic acid, itaconic acid, fumaric acid, maleic acid, monomethyl itaconate, monomethyl fumarate, monobutyl fumarate, and maleic anhydride; and sulfonic acid and phosphoric or phosphonic acid monomers. The use of the term "(meth)" followed by another term such as (meth)acrylate or (meth)acrylamide, as used throughout the disclosure, refers to both acrylates or acrylamides and methacrylates and methacrylamides, respectively. In certain embodiments, the emulsion polymer includes less than 5 wt%, or in the alternative, less than 0.5 wt%, based on the weight of the polymer, of a copolymerized multi-ethylenically unsaturated monomer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

The emulsion polymerization techniques used to prepare the aqueous emulsion polymer are well known in the art such as, for example, as disclosed in U.S. Patents No. 4,325,856; 4,654,397; and 4,814,373. Conventional surfactants may be used such as, for example, anionic and/or nonionic emulsifiers such as, for example, alkali metal or ammonium alkyl sulfates, alkyl sulfonic acids, fatty acids, and oxyethylated alkyl phenols. The amount of surfactant used is usually 0.1% to 6% by weight, based on the weight of total monomer. Either thermal or redox initiation processes may be used. Conventional free radical initiators may be used such as, for example, hydrogen peroxide, t-butyl hydroperoxide, t-amyl hydroperoxide, ammonium and/or alkali persulfates, typically at a level of 0.01% to 3.0% by weight, based on the weight of total monomer. Redox systems using the same initiators coupled with a suitable reductant such as, for example, sodium sulfoxylate formaldehyde, sodium hydrosulfite, isoascorbic acid, hydroxylamine sulfate and sodium bisulfite may be used at similar levels, optionally in combination with metal ions such as, for example iron and copper, optionally further including complexing agents for the metal. Chain transfer agents such as mercaptans may be used to lower the molecular weight of the polymers. The monomer mixture may be added neat or as an emulsion in water. The monomer mixture may be added in a single addition or in multiple additions or continuously over the reaction period using a uniform or varying composition. Processes yielding polymodal particle size distributions such as those disclosed in US Patent Nos. 4,384,056 and 4,539,361, for example, may be employed.

In another embodiment of the present invention, the aqueous emulsion polymer may be prepared by a multistage emulsion polymerization process, in which at least two stages differing in composition are polymerized in sequential fashion Each of the stages of the multi-staged emulsion polymer may contain the same monomers, surfactants, chain transfer agents, etc. as disclosed herein-above for the emulsion polymer. The polymerization techniques used to prepare such multistage emulsion polymers are well known in the art such as, for example, US Patents No. 4,325,856; 4,654,397; and 4,814,373.

The calculated glass transition temperature ("Tg") of the emulsion polymer is typically from -65°C to 105°C, or in the alternative, from -25°C to 35°C. Tgs of the polymers are calculated herein by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

,

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2, all temperatures being in °K.

The glass transition temperature of homopolymers may be found, for example, in "Polymer Handbook", edited by J. Brandrup and E.H. Immergut, Interscience Publishers.

The average particle diameter of the emulsion polymer particles is typically from 30 nanometers to 500 nanometers, as measured by a Brookhaven Model BI-90 Particle Sizer supplied by Brookhaven Instrument Corp., Holtsville, NY.

The aqueous composition of this invention includes from 0.03% to 1% by weight based on the weight of the polymer, of a compound having the formula A-B-C-D wherein A is a perfluoro group of the formula $CF_3(CF_2)_n$ wherein n is from 1 to 5, B is a hydrocarbon group of the formula $(CH_2)_m$ wherein m is fromlto 4, C is a phosphate residue, and D is a cation, wherein the compound has a BCF of from 1 to 1000, preferably from 1 to 100. By "phosphate residue" is meant a phosphate group to which is bound the B group, such that the compound is a phosphate ester, D is a cation, preferably a monvalent cation such as, for example, Na+, K+ or NH4+, more preferably NH4+. The compound was selected from a broad range of fluorinated phosphate esters on the basis that it unexpectedly demonstrated both a useful low BCF value of from 1 to 1000 and, as an ingredient in dry coatings, providing thereto a useful level of block resistance. The fluorocarbon compound can be prepared by various methods as disclosed, for example, in US Patents No. 2,597,702 and 4,064,067. Such preparations typically provide a mixture of a fluorinated phosphate monoester and a fluorinated phosphate diester. The ratio of monoester to diester can be varied by selecting the ratio of raw materials and the reaction conditions. Further, mixtures of the precursor fluoro alcohols may also be used to provide mixtures of compounds which may be used in the aqueous composition of this invention.

Inorganic particles such as, for example, pigments and extenders, may be included in the aqueous composition at a level of from 0 to 95 volume %, based on the total dry volume of the aqueous composition and inorganic particles.

Typically, the aqueous composition of this invention has a solids level in the range of from 20 to 50 volume %, based on the volume of the aqueous composition. The pH of the aqueous composition is typically in the range of from 3 to 11, and preferably, in the range of from 7 to 10. A suitable viscosity range for the aqueous composition is from 50 to 130 Kreb units (KU), preferably from 70 to 120 KU, and more preferably from 90 to 110 KU.

Inorganic particles include: metal oxides such as zinc oxide, cerium oxide, tin oxide, antimony oxide, zirconium oxide, chromium oxide, iron oxide, lead oxide, aluminum oxide, silicon oxide, titanium dioxide; zinc sulfide, lithopone, calcium carbonate, calcium sulfate, barium sulfate, mica, clay, calcined clay, feldspar, nepheline syenite, wollastonite, diatomaceous earth, alumina silicates, and talc. In one embodiment, the inorganic particles may have a particle size which is from 1 to 100nm, preferably from 1 to 50 nm. Examples of desired inorganic particles with a particle size of less than 100nm include zinc oxide, silicon oxide, titanium dioxide, and iron oxide.

The aqueous composition may optionally contain organic pigment particles. Suitable organic pigments include plastic pigments such as solid bead pigments and microsphere pigments containing voids or vesicles. Examples of solid bead pigments include polystyrene and polyvinyl chloride beads. Examples of microsphere pigments, which include polymer particles containing one or more voids include Ropaque™ opaque polymer Polymers and vesiculated polymer particle, as disclosed in U.S. 4,427,835; U.S. 4,920,160; U.S. 4,594,363; U.S. 4,469,825; U.S. 4,468,498; U.S. 4,880,842; U.S. 4,985,064; U.S. 5,157,084; U.S. 5,041,464; U.S. 5,036,109; U.S. 5,409,776; and U.S. 5,510,422.

The aqueous composition of this invention may find utility as an aqueous coating composition. The aqueous compositions including inorganic particles are prepared by techniques which are well known in the coatings art. First, the inorganic particles are typically well dispersed in the presence of the organic polymer in an aqueous medium under high shear such as is afforded by a COWLES (R) mixer. Then, in some embodiments, an organic pigment and, independently, an emulsion polymer may be added under low shear stirring along with other coatings adjuvants as desired. The aqueous composition may contain, in addition to the fluorinated phosphate ester and the polymer. conventional coatings adjuvants such as, for example, emulsifiers, coalescing agents(coalescents), plasticizers, antifreezes, curing agents, buffers, neutralizers, thickeners, rheology modifiers, humectants, wetting agents, biocides, plasticizers, antifoaming agents, UV absorbers, fluorescent brighteners, light or heat stabilizers, biocides, chelating agents, dispersants, colorants, waxes, water-repellants, and anti-oxidants.

The aqueous composition optionally contains a volatile organic compound ("VOC"). A VOC is defined herein as a carbon containing compound that has a boiling point below 280 °C at atmospheric pressure. Water and ammonia are excluded from VOCs. Frequently a VOC is deliberately added to a paint or coating to improve the film properties of a coating or to aid in the application properties of the composition employed to prepare the coating. Examples are glycol ethers, organic esters, aromatic compounds, ethylene and propylene glycol, and aliphatic hydrocarbons.

In one embodiment, the aqueous composition contains up to 20 weight % VOC by weight based on the total weight of the aqueous coating composition; preferably the aqueous coating composition contains less than 5% VOC by weight based on the total weight of the aqueous coating composition; more preferably the aqueous coating composition contains less than 3% VOC by weight based on the total weight of the aqueous coating composition; even more preferably the aqueous coating composition contains less than 1.7% VOC by weight based on the total weight of the aqueous coating composition. Methods such as steam stripping and choice of low VOC containing additives like biocides, defoamers, soaps, dispersants, and thickeners are suitable for further reducing the aqueous coating composition to less than 0.05% VOC by weight based on the total weight of the aqueous coating composition. In one embodiment, the aqueous coating composition has less than 0.1% VOC by weight based on the total weight of the aqueous coating composition.

Conventional coatings application methods such as, for example, brushing, rolling, and spraying methods such as, for example, air-atomized spray, air-assisted spray, airless spray, high volume low pressure spray, and air-assisted airless spray may be used for applying the aqueous composition of this invention. Additionally, for some systems, other application techniques may be used to apply the aqueous polymer composition, such as, printing devices as ink jet, gravure roll, etc, caulk gun, roll coaters, and curtain coaters. The aqueous polymer composition may be advantageously applied to substrates such as, for example, plastic, wood, metal, primed surfaces, previously painted surfaces, weathered painted surfaces, glass, textiles, nonwovens, composites, and cementitious substrates. Drying is typically allowed to proceed under ambient conditions such as, for example, at 0°C to 35°C but may be accelerated with higher temperatures or low humidity.

## EXPERIMENTAL METHOD

### Block resistance testing of coatings

The block testing protocol is based on the ASTM method D4946-89. The coatings to be tested were cast on a sealed white drawdown chart (Laneta Form WB) with a 3 mil bird bar applicator. The film was allowed to dry in a controlled temperature room maintained at 25°C and 50% relative humidity. Four 1.5 x 1.5 inches sections were cut from the chart

after 1, 4, and 7 days. Two sets of tests (room temperature and 50°C) were carried out by placing two each of the cut squares face-to-face, with the coated sides in contact. With the coated squares on a flat surface, a rubber stopper (N0. 8) was placed on the coated squares with a 1000 g weight on top of the stopper. After 30 minutes under the weight, the coated squares were tested for block. The test was carried out both under room temperature and at 50°C in an oven. For the 120°C test, the rubber stopper and weight was equilibrated in the oven before applying to the squares. After 30 minutes, the weight and stopper were removed and the oven sample was allowed to cool to room temperature. The two square sections of each set were peeled apart with a slow but steady force. The block was rated based on any ripping or tearing (seal) of the film or chart, as evidenced by the transfer of material between the two paint films. As for a sample that has no transfer, the rating was based on the tackiness of the film as the sections were pulled apart.

Ratings

10 - No tack
09 - Trace tack
08 - Slight tack
07 - Slight tack
06 - Moderate tack
05 - Moderate tack
04 - Severe tack, but no seal
03 - 05% - 25% seal
02 - 25% - 50% seal
01 - 50% - 75% seal
00 - 100% seal

The following examples are presented for illustrative purposes.

EXAMPLE 1 Preparation of Nonafluorohexyl Phosphate

25.0g (0.0947 mol) of 3,3,4,4,5,5,6,6,6-nonafluoro-1-hexanol (boiling point of 140°C) was weighed into a thick-walled glass pressure tube. A magnetic stir bar was introduced into the vessel followed by 16.13g (0.1136 mol) of polyphosphoric acid. The vessel was capped with a threaded teflon stopper. The two reactants separated as two layers with the polyphosphoric acid settled to the bottom of the reaction vessel. After 30 minutes at room temperature, the reaction vessel was heated in an oil bath to 140°C for six hours. The phosphate layer had begun to turn a light orange-red color and the reactants were mixed thoroughly by shaking the vessel. The vessel was placed back into the oil bath and the temperature was increased to 150°C for an hour to react any remaining alcohol. Upon cooling, the product hardened into an orange-red semi-solid, and a sample was removed for titration. The composition of the final product was determined as 59.8% mono(nonafluorohexyl) phosphate, 21.6% di(nonafluorohexyl) phosphate, and 18.6% phosphoric acid.

EXAMPLE 2. Preparation of Nonafluorohexyl Sulfate

20.0g (0.0757 mol) of 3,3,4,4,5,5,6,6,6-nonafluoro-1-hexanol (boiling point of 140°C) was weighed into a thick-walled glass pressure tube. A small magnetic stir bar was added. To this, 7.80g (0.0795 mol) of 20% Oleum (fuming sulfuric acid) was added drop-wise very slowly. The alcohol layer began turning a light orange color (which got darker as more acid was added) after a few drops were added, and the vessel was gently swirled after each gram of acid was added. After all the acid was added, the vessel was capped and gently swirled a few times, and then allowed to sit at room temperature for 15 minutes. After 15 minutes, the vessel was clamped in place over a magnetic stir plate, and the contents were subjected to gentle agitation. The agitation was slowly increased over a period of about 30 minutes. The material inside the reaction vessel was a reddish-orange liquid, with a viscosity comparable to water, and a sample of the reaction mixture was titrated with 0.5 M KOH to determine conversion. The titrator detected a single, sharp equivalence point, which is consistent with formation of product.

EXAMPLES 3-16. Preparation of Various Fluorocarbons

Other phosphates were prepared similar to Example 1 with the corresponding alcohols. The reactants and conditions were listed in Table 1.

Table 3.1 Preparation of Various Fluorocarbons

| Example(1) | Grams of Alcohol(2) | Grams of Acid | Temperature (°C) | Time (hours) | Monoester : Diester |
|---|---|---|---|---|---|
| 3 | 10.00 | 36.96 | 75 - 85 | 4.0 | 3.16 |
| 4 | 10.00 | 17.03 | 85 - 90 | 4.0 | 3.46 |
| 5 | 10.00 | 28.45 | 75 - 85 | 4.0 | 3.31 |
| 6 | 10.00 | 11.36 | 85 - 90 | 4.0 | 5.10 |
| 8 | 10.00 | 8.52 | 90 - 95 | 4.0 | 3.39 |
| 9 | 10.00 | 5.15 | 25 | 0.5 | --- |
| 11 | 20.00 | 14.68 | 130 | 6.0 | 3.49 |
| 12 | 25.00 | 16.13 | 140 - 150 | 8.0 | 3.55 |
| 13 | 20.00 | 7.80 | 25 | 0.5 | --- |
| 15 | 10.00 | 7.00 | 110-120 | 8.0 | 5.45 |
| 16 | 10.00 | 22.98 | 90-100 | 4.0 | 3.10 |

(1) The Example numbers are the same as those listed in Table 17.3.
(2) The alcohols used correspond to the structure as listed in columns A-D, Table 17.3.

EXAMPLE 17 Coating composition for screening of block additives

The test coating used for the screening of block additives was a semigloss formulation. The composition of the coating is listed in Table 17.1. The first set of ingredients was introduced into a 1 gallon paint can under agitation. After the mixture was fully mixed, the second set of ingredients was added under agitation.

Table 17.1 Test coating formulation

| Raw Material | Pounds | Gallons |
|---|---|---|
| Kronos™ 4311 | 265.00 | 13.31 |
| Water | 150.00 | 17.97 |
| Ropaque™ Ultra | 50.00 | 5.85 |
| Ethylene Glycol | 30.50 | 3.28 |
| Texanol™ | 11.30 | 1.42 |
| Drewplus™ L475 | 4.00 | 0.53 |
| | | |
| Rhoplex™SG-30 | 420.00 | 47.53 |
| Water | 31.80 | 3.81 |
| DSX-3075 | 46.00 | 5.25 |
| Nonionic Rheology Modifier | 9.00 | 1.05 |

(continued)

| Raw Material | Pounds | Gallons |
|---|---|---|
| Totals | 1017.60 | 100.00 |
| Ropaque™, Rhoplex™, and Acrysol™ are trademarks of Rohm and Haas Company. Kronos™ is a trademark of Kronos Worldwide, Inc. Texanol™ is a trademark of Eastman Chemical Co. Drewplus™ is a trademark of Ashland, Inc. | | |

For the fluorocarbon block testing, 254 g of the test coating was introduced into a series of half-pint paint cans. Each fluorocarbon as listed in Examples 1-16 was introduced into the paints according to the desired level under agitation. The fluorocarbon levels listed in Table 17.2 were solid weights based on the total binder solids. The fluorocarbons were dissolved in water at ~30% solids, neutralized to pH=9 with ammonium hydroxide and the total amounts added to the paints were calculated accordingly.

Table 17.2 Fluorocarbon Levels for Block Resistance

| Fluorocarbon Level (ppm) | Coating (g) | Polymeric Binder (1) (g) | Fluorocarbon (2) (g) |
|---|---|---|---|
| 500 | 254 | 52.5 | 0.02625 |
| 1000 | 254 | 52.5 | 0.05250 |
| 5000 | 254 | 52.5 | 0.2625 |
| 10000 | 254 | 52.5 | 0.5250 |

(1) The weight of polymeric binder solids in the 254 g of the test coating.
(2) The weight of fluorocarbon(solid weight) added to 254 g of the test coating to reach the designated levels.

Table 17.3 List of Fluorocarbons A-B-C-D Tested

| Example | A | B | C | D |
|---|---|---|---|---|
| 1 | $CF_3$ | - | $SO_3$ | Na |
| 2 | $CF_3$ | - | $CO_2$ | Na |
| 3 | $CH_3CH_2$ | - | $PO_4$ | $(NH_4)_2$ |
| 4 | $CF_3$ | $CH_2$ | $PO_4$ | $(NH_4)_2$ |
| 5 | $CH_3CH_2CH_2$ | - | $PO_4$ | $(NH_4)_2$ |
| 6 | $CF_3CF_2$ | $CH_2$ | $PO_4$ | $(NH_4)_2$ |
| 7 | $CF_3CF_2CF_2$ | - | $CO_2$ | Na |
| 8 | $CF_3CF_2CF_2$ | $CH_2$ | $PO_4$ | $(NH_4)_2$ |
| 9 | $CF_3CF_2CF_2$ | $CH_2$ | $SO_4$ | $NH_4$ |
| 10 | $CF_3CF_2CF_2CF_2$ | - | $SO_3$ | K |
| 11 | $HCF2CF_2CF_2CF_2$ | $CH_2$ | $PO_4$ | $(NH_4)_2$ |
| 12 | $CF_3CF_2CF_2CF_2$ | $CH_2CH_2$ | $PO_4$ | $(NH_4)_2$ |
| 13 | $CF_3CF_2CF_2CF_2$ | $CH_2CH_2$ | $SO_4$ | $NH_4$ |
| 14 | $CF_3CF_2CF_2CF_2CF_2CF_2$ | - | $SO_3$ | K |

(continued)

| Example | A | B | C | D |
|---|---|---|---|---|
| 15 | 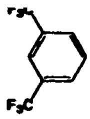 | $CH_2$ | $PO_4$ | $(NH_4)_2$ |
| 16 | $CH_3CH_2CH_2CH_2$ | - | $PO_4$ | $(NH_4)_2$ |
| | | | | |
| Comp. A | Zonyl™ 9361 | | | |
| Comp. B | Novec™ FC-4432 | | | |
| Comp. C | Strodex™ FT-50K | | | |
| Zonyl 9361 is an anionic fluorocarbon surfactant from DuPont<br>Novec FC4432 is a nonionic fluorocarbon surfactant from 3M<br>Strodex FT-50K is phosphate ester of alcohol ethoxylated, potassium salt from Dexter Chemical, L.L.C. | | | | |

Table 17.4 Block Ratings for Fluorocarbons

| | | RT/50°C Block Rating after Drying | | | | | |
|---|---|---|---|---|---|---|---|
| Fluorocarbon | Level | 1 Day | | 4 Day | | 7 Day | |
| | (ppm) | RT | 50°C | RT | 50°C | RT | 50°C |
| | | | | | | | |
| None | 0 | 6 | 0 | 6 | 0 | 6 | 0 |
| Comparative A | 450 | 9 | 8 | 10 | 8 | 10 | 9 |
| Comparative B | 5000 | 5 | 0 | 6 | 0 | 7 | 0 |
| Comparative C | 5000 | 3 | 0 | 3 | 0 | 6 | 0 |
| 1 | 5000 | 6 | 3 | 8 | 3 | 8 | 3 |
| 1 | 10000 | 7 | 6 | 8 | 7 | 8 | 7 |
| 2 | 5000 | 7 | 3 | 8 | 3 | 9 | 3 |
| 2 | 10000 | 8 | 6 | 8 | 6 | 9 | 7 |
| 3 | 10000 | 6 | 0 | 7 | 1 | 8 | 0 |
| 4 | 10000 | 8 | 3 | 9 | 3 | 9 | 3 |
| 5 | 10000 | 6 | 0 | 7 | 0 | 7 | 0 |
| 6 | 10000 | 9 | 0 | 9 | 2 | 9 | 3 |
| 7 | 10000 | 6 | 0 | 8 | 3 | 8 | 6 |
| 8 | 1000 | 9 | 5 | 9 | 6 | 9 | 6 |
| 8 | 5000 | 9 | 7 | 10 | 9 | 10 | 9 |
| 9 | 10000 | 8 | 1 | 9 | 1 | 10 | 2 |
| 10 | 10000 | 7 | 0 | 7 | 0 | 8 | 2 |
| 11 | 10000 | 7 | 0 | 7 | 0 | 7 | 0 |
| 12 | 450 | 9 | 6 | 9 | 7 | 9 | 8 |
| 12 | 1000 | 9 | 8 | 10 | 8 | 10 | 9 |

(continued)

| | | RT/50°C Block Rating after Drying | | | | | |
|---|---|---|---|---|---|---|---|
| Fluorocarbon | Level | 1 Day | | 4 Day | | 7 Day | |
| | (ppm) | RT | 50°C | RT | 50°C | RT | 50°C |
| 13 | 5000 | 7 | 0 | 9 | 0 | 10 | 2 |
| 13 | 10000 | 9 | 6 | 10 | 8 | 10 | 9 |
| 14 | 10000 | 9 | 0 | 9 | 0 | 10 | 1 |
| 15 | 10000 | 7 | 0 | 8 | 0 | 8 | 2 |
| 16 | 5000 | 6 | 0 | 7 | 0 | 7 | 0 |
| 16 | 10000 | 8 | 4 | 8 | 4 | 8 | 4 |

EXAMPLE 18 Bioconcentration Factor

The bioconcentration factor ("BCF") herein is that estimated using the software program Bcfwin v2.15. The entire suite of environmental estimation software, EPIWIN, can be downloaded from the U.S. EPA website: (http://www.epa.gov/oppt/exposure/pubs/episuitedl.htm) The Bcfwin module is included in the EPIWIN suite. The EPIWIN program uses quantitative structure-activity relationships (QSARs) for the estimation of different physical-chemical and toxicological properties. Usually, the only input requirement is the SMILES (Simplified Molecular Input Line Entry System) notation of the molecule of interest. SMILES is a notation system for representing chemical structures in two dimensions. One can write SMILES notations by referring to the literature (Weininger; J. Chem. Inf. Comput. Sci. 28: 31-6; 1988). However, the SMILES notation can also be obtained by using the molecular modeling programs, such as CS ChemDraw. Once the structure of the molecule of interest is "drawn" in the program, the SMILES notation can be obtained by using the "Edit - Copy as SMILES" function. Subsequently, the notation can be pasted into the Bcfwin input box for calculation. NB: The SMILES notation for each molecule was written as the anionic species. However, the Bcfwin program assumed the molecule to be a neutral species. (e.g.$CF_3SO_3H$)

Table 18.1 Bioconcentration Factors (BCF) of Various Fluorocarbons (A-B-C-)

| | A | B | C | BCF |
|---|---|---|---|---|
| 1 | $CF_3$ | - | $SO_3$ | 3.162 |
| 2 | $CF_3$ | - | $CO_2$ | 3.162 |
| 3 | $CH_3CH_2$ | - | $PO_4$ | 3.162 |
| 4 | $CF_3$ | $CH_2$ | $PO_4$ | 3.162 |
| 5 | $CH_3CH_2CH_2$ | - | $PO_4$ | 3.162 |
| 6 | $CF_3CF_2$ | $CH_2$ | $PO_4$ | 1.558 |
| 7 | $CF_3(CF_2)_2$ | - | $CO_2$ | 3.162 |
| 8 | $CF_3(CF_2)_2$ | $CH_2$ | $PO_4$ | 8.638 |
| 9 | $CF_3(CF_2)_2$ | $CH_2$ | $SO_4$ | 3.162 |
| 10 | $CF_3(CF_2)_3$ | - | $SO_3$ | 3.162 |
| 11 | $HCF_2(CF_2)_3$ | $CH_2$ | $PO_4$ | 16.3 |
| 12 | $CF_3(CF_2)_3$ | $CH_2CH_2$ | $PO_4$ | 110 |
| 13 | $CF_3(CF_2)_3$ | $CH_2CH_2$ | $SO_4$ | 3.162 |
| 14 | $CF_3(CF_2)_5$ | - | $SO_3$ | 9.121 |
| 15 | 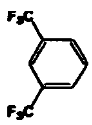 | $CH_2$ | $PO_4$ | 84.44 |

(continued)

| | A | B | C | BCF |
|---|---|---|---|---|
| 16 | $CH_3(CH_2)_3$ | - | $PO_4$ | 3.162 |
| 17 | $CF_3(CF_2)_4$ | - | $PO_4$ | 294.8 |
| 18 | $CF_3(CF_2)_4$ | $CH_2CH_2$ | $PO_4$ | 1515 |
| 19 | $CF_3(CF_2)_4$ | $CH_2CH_2$ | $SO_4$ | 3.162 |
| 20 | $CF_3(CF_2)_5$ | $CH_2CH_2$ | $PO_4$ | 3518 |
| 21 | $CF_3(CF_2)_5$ | $CH_2CH_2$ | $SO_4$ | 3.162 |
| 22 | $CF_3(CF_2)_5$ | - | $PO_4$ | 1635 |
| 23 | $CF_3(CF_2)_6$ | $CH_2CH_2$ | $PO_4$ | 19500 |
| 24 | $CF_3(CF_2)_6$ | $CH_2CH_2$ | $SO_4$ | 3.162 |
| 25 | $CF_3(CF_2)_6$ | - | $PO_4$ | 9065 |
| 26 | $CF_3(CF_2)_7$ | - | $PO_4$ | 61660 |
| 27 | $CF_3(CF_2)_7$ | $CH_2CH_2$ | $PO_4$ | 15770 |
| 28 | $CF_3(CF_2)_8$ | $CH_2CH_2$ | $PO_4$ | 748.7 |
| 29 | $CF_3(CF_2)_9$ | - | $PO_4$ | 139 |
| 30 | $CF_3(CF_2)_9$ | $CH_2CH_2$ | $PO_4$ | 35.54 |
| 31 | $CF_3(CF_2)_{11}$ | - | $PO_4$ | 3.162 |
| 32 | $CF_3(CF_2)_{11}$ | $CH_2CH_2$ | $PO_4$ | 3.162 |
| | | | | |
| C1 | Zonyl™ 9361 (1) | | | 15770 |
| C2 | Novec FC-432 | | | |
| C3 | Strodex FT-50K | | | |
| | | | | |

(1) The structure of Zonyl™ 9361 was believed to be a mixture of sample 20 and 27.

Table 18.2 Bioconcentration Factors (BCF) of Various Mono and Diester Fluorocarbons

| | | | |
|---|---|---|---|
| | $CF_3CF_2\text{-}CH_2$ | $PO_4$ | 1.558 |
| | $(CF_3CF_2\text{-}CH_2)_2$ | $PO_4$ | 41.5 |
| 12 | $CF_3(CF_2)_3$ | $PO_4$ | 114.4 |
| | $(CF_3(CF_2)_3)_2$ | $PO_4$ | 561.6 |
| 20 | $CF_3(CF_2)_5$ | $PO_4$ | 3518 |
| | $(CF_3(CF_2)_5)_2$ | $PO_4$ | 3.162 |
| 27 | $CF_3(CF_2)_7$ | $PO_4$ | 15770 |
| | $(CF_3(CF_2)_7)_2$ | $PO_4$ | 3.162 |

## Claims

1. An aqueous composition comprising:

a) an aqueous medium;
b) a polymer;
c) from 0.03% to 1% by weight based on the weight of said polymer of a compound having the formula A-B-C-D wherein
A is a perfluoro group of the formula $CF_3(CF_2)_n$ wherein n is from 1 to 5,
B is a hydrocarbon group of the formula $(CH_2)_m$ wherein m is from lto 4,
C is a phosphate residue, and
D is a cation,
wherein said compound has a bioconcentration factor (BCF) calculated using Bcfwin v2.15 software program from the U.S. EPA from 1 to 1000.

2. The composition according to claim 1 wherein
A is a perfluoro group of the formula $CF_3(CF_2)_n$ wherein n is from 2 to 3 and
B is a hydrocarbon group of the formula $(CH_2)_m$ wherein m is from 1 to 2.

3. The composition according to claim 1 wherein said compound has a bioconcentration factor (BCF) from 1 to 100.

4. The composition according to claim 1 wherein said polymer has been prepared by emulsion polymerization.

5. A process for providing an aqueous composition comprising:

a) forming a first composition comprising an aqueous medium and a polymer, and
b) admixing therewith from 0.03% to 1% by weight based on the weight of said polymer, of a compound having the formula A-B-C-D wherein
A is a perfluoro group of the formula $CF_3(CF_2)_n$ wherein n is from 1 to 5,
B is a hydrocarbon group of the formula $(CH_2)_m$ wherein m is from 1 to 4,
C is a phosphate residue, and
D is a cation,
wherein said compound has a BCF calculated using Bcfwin v2.15 software program from the U.S. EPA of from 1 to 1000.

6. The process according to claim 5 wherein said compound has a BCF of from 1 to 100.

7. A process for providing a polymeric coating comprising

a) forming a composition comprising an aqueous medium and a polymer;
b) admixing therewith from 0.03% to 1% by weight based on the weight of said polymer, of a compound having the formula A-B-C-D wherein
A is a perfluoro group of the formula $CF_3(CF_2)_n$ wherein n is from 1 to 5,
B is a hydrocarbon group of the formula $(CH_2)_m$ wherein m is from 1 to 4,
C is a phosphate residue, and
D is a cation,
wherein said compound has a BCF calculated using Bcfwin v2.15 software program from the U.S. EPA of from 1 to 1000;
c) applying said admixture to a substrate; and
d) drying, or allowing to dry, said admixture.

8. The process according to claim 7 wherein said compound has a BCF of from 1 to 100.

9. The process according to claim 5 or claim 7 wherein
A is a perfluoro group of the formula $CF_3(CF_2)_n$ wherein n is from 2 to 3 and
B is a hydrocarbon group of the formula $(CH_2)_m$ wherein m is from 1 to 2.

10. The process of claim 5 or claim 7 wherein said polymer has been prepared by emulsion polymerization.

## Patentansprüche

**1.** Eine wässrige Zusammensetzung, die Folgendes beinhaltet:

a) ein wässriges Medium;
b) ein Polymer;
c) von 0,03 bis 1 Gew.-%, bezogen auf das Gewicht des Polymers, einer
Verbindung mit der Formel A-B-C-D, wobei
A eine Perfluor-Gruppe der Formel $CF_3(CF_2)_n$ ist, wobei n von 1 bis 5 ist,
B eine Kohlenwasserstoff-Gruppe der Formel $(CH_2)_m$ ist, wobei m von 1 bis 4 ist,
C ein Phosphatrest ist und
D ein Kation ist,
wobei die Verbindung einen Biokonzentrationsfaktor (BCF) von 1 bis 1000 aufweist, berechnet unter Verwendung des Softwareprogramms Bcfwin v2.15 von USEPA.

**2.** Zusammensetzung gemäß Anspruch 1, wobei
A eine Perfluor-Gruppe der Formel $CF_3(CF_2)_n$ ist, wobei n von 2 bis 3 ist, und
B eine Kohlenwasserstoff-Gruppe der Formel $(CH_2)_m$ ist, wobei m von 1 bis 2 ist.

**3.** Zusammensetzung gemäß Anspruch 1, wobei die Verbindung einen Biokonzentrationsfaktor (BCF) von 1 bis 100 aufweist.

**4.** Zusammensetzung gemäß Anspruch 1, wobei das Polymer durch Emulsionspolymerisation hergestellt worden ist.

**5.** Ein Verfahren zum Bereitstellen einer wässrigen Zusammensetzung, das Folgendes beinhaltet:

a) Bilden einer ersten Zusammensetzung, die ein wässriges Medium und ein Polymer beinhaltet, und
b) Beimischen dazu von 0,03 bis 1 Gew.-% bezogen auf das Gewicht des Polymers
einer Verbindung mit der Formel A-B-C-D, wobei
A eine Perfluor-Gruppe der Formel $CF_3(CF_2)_n$ ist, wobei n von 1 bis 5 ist,
B eine Kohlenwasserstoff-Gruppe der Formel $(CH_2)_m$ ist, wobei m von 1 bis 4 ist,
C ein Phosphatrest ist und
D ein Kation ist,
wobei die Verbindung einen BCF von 1 bis 1000 aufweist, berechnet unter Verwendung des Softwareprogramms Bcfwin v2.15 von USEPA.

**6.** Verfahren gemäß Anspruch 5, wobei die Verbindung einen BCF von 1 bis 100 aufweist.

**7.** Ein Verfahren zum Bereitstellen einer polymeren Beschichtung, das Folgendes beinhaltet:

a) Bilden einer Zusammensetzung, die ein wässriges Medium und ein Polymer beinhaltet;
b) Beimischen dazu von 0,03 bis 1 Gew.-%, bezogen auf das Gewicht des
Polymers, einer Verbindung mit der Formel A-B-C-D, wobei A eine Perfluor-Gruppe der Formel $CF_3(CF_2)_n$ ist, wobei n von 1 bis 5 ist,
B eine Kohlenwasserstoff-Gruppe der Formel $(CH_2)_m$ ist, wobei m von 1 bis 4 ist,
C ein Phosphatrest ist und
D ein Kation ist,
wobei die Verbindung einen BCF von 1 bis 1000 aufweist, berechnet unter Verwendung des Softwareprogramms Bcfwin v2.15 von USEPA.
c) Auftragen der Beimischung auf ein Substrat; und
d) Trocknen oder Trocknenlassen der Beimischung.

**8.** Verfahren gemäß Anspruch 7, wobei die Verbindung einen BCF von 1 bis 100 aufweist.

**9.** Verfahren gemäß Anspruch 5 oder Anspruch 7, wobei
A eine Perfluor-Gruppe der Formel $CF_3(CF_2)_n$ ist, wobei n von 2 bis 3 ist, und
B eine Kohlenwasserstoff-Gruppe der Formel $(CH_2)_m$ ist, wobei m von 1 bis 2 ist.

10. Verfahren gemäß Anspruch 5 oder Anspruch 7, wobei das Polymer durch Emulsionspolymerisation hergestellt worden ist.

**Revendications**

1. Une composition aqueuse comprenant :

   a) un milieu aqueux;
   b) un polymère ;
   c) de 0,03 % à 1 % en poids rapporté au poids dudit polymère d'un composé ayant la formule A-B-C-D dans laquelle
   A est un groupe perfluoro de la formule $CF_3(CF_2)_n$ dans laquelle n va de 1 à 5,
   B est un groupe hydrocarbure de la formule $(CH_2)_m$ dans laquelle m va de 1 à 4, C est un résidu de phosphate, et D est un cation,
   dans laquelle ledit composé a un facteur de bioconcentration (BCF) calculé à l'aide du programme logiciel Bcfwin v2.15 de l'EPA des États-Unis allant de 1 à 1 000.

2. La composition selon la revendication 1 dans laquelle
   A est un groupe perfluoro de la formule $CF_3(CF_2)_n$ dans laquelle n va de 2 à 3 et
   B est un groupe hydrocarbure de la formule $(CH_2)_m$ dans laquelle m va de 1 à 2.

3. La composition selon la revendication 1 dans laquelle ledit composé a un facteur de bioconcentration (BCF) allant de 1 à 100.

4. La composition selon la revendication 1 dans laquelle ledit polymère a été préparé par polymérisation en émulsion.

5. Un procédé destiné à fournir une composition aqueuse comprenant les étapes consistant à :

   a) former une première composition comprenant un milieu aqueux et un polymère,
   et
   b) mélanger avec celle-ci de 0,03 % à 1 % en poids rapporté au poids dudit polymère d'un composé ayant la formule A-B-C-D dans laquelle A est un groupe perfluoro de la formule $CF_3(CF_2)_n$ dans laquelle n va de 1 à 5, B est un groupe hydrocarbure de la formule $(CH_2)_m$ dans laquelle m va de 1 à 4, C est un résidu de phosphate, et D est un cation,
   dans lequel ledit composé a un BCF calculé à l'aide du programme logiciel Bcfwin v2.15 de l'EPA des États-Unis allant de 1 à 1 000.

6. Le procédé selon la revendication 5 dans lequel ledit composé a un BCF allant de 1 à 100.

7. Un procédé destiné à fournir un revêtement polymère comprenant les étapes consistant à

   a) former une composition comprenant un milieu aqueux et un polymère ;
   b) mélanger avec celle-ci de 0,03 % à 1 % en poids rapporté au poids dudit polymère d'un composé ayant la formule A-B-C-D dans laquelle A est un groupe perfluoro de la formule $CF_3(CF_2)_n$ dans laquelle n va de 1 à 5, B est un groupe hydrocarbure de la formule $(CH_2)_m$ dans laquelle m va de 1 à 4, C est un résidu de phosphate, et D est un cation,
   dans lequel ledit composé a un BCF calculé à l'aide du programme logiciel Bcfwin v2.15 de l'EPA des États-Unis allant de 1 à 1 000 ;
   c) appliquer ledit mélange sur un substrat ; et
   d) sécher, ou laisser sécher, ledit mélange.

8. Le procédé selon la revendication 7 dans lequel ledit composé a un BCF allant de 1 à 100.

9. Le procédé selon la revendication 5 ou la revendication 7 dans lequel A est un groupe perfluoro de la formule $CF_3(CF_2)_n$ dans laquelle n va de 2 à 3 et
   B est un groupe hydrocarbure de la formule $(CH_2)_m$ dans laquelle m va de 1 à 2.

**10.** Le procédé de la revendication 5 ou la revendication 7 dans lequel ledit polymère a été préparé par polymérisation en émulsion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4325856 A
- US 4654397 A
- US 4814373 A
- US 4384056 A
- US 4539361 A
- US 2597702 A
- US 4064067 A
- US 4427835 A
- US 4920160 A
- US 4594363 A
- US 4469825 A
- US 4468498 A
- US 4880842 A
- US 4985064 A
- US 5157084 A
- US 5041464 A
- US 5036109 A
- US 5409776 A
- US 5510422 A


### Non-patent literature cited in the description


- Fluoroadditives: antiblock characteristics in architectural paint systems. *Surface Coatings Australia,* 2004, vol. 41 (4), 14-16
- **T.G. FOX.** *Bull. Am. Physics Soc.,* 1956, vol. 1 (3), 123
- Polymer Handbook. Interscience Publishers
- **WEININGER.** *J. Chem. Inf. Comput. Sci.,* 1988, vol. 28, 31-6